Europäisches Patentamt

European Patent Office

Office européen des brevets

(11) Publication number: **0 290 183 B1**

(12) **EUROPEAN PATENT SPECIFICATION**

(45) Date of publication of patent specification: **03.02.93** (51) Int. Cl.⁵: **H04N 9/80,** H04N 5/783

(21) Application number: **88303747.5**

(22) Date of filing: **26.04.88**

(54) **Pal video signal processing device.**

(30) Priority: **08.05.87 JP 112947/87**
**08.05.87 JP 112948/87**

(43) Date of publication of application:
**09.11.88 Bulletin 88/45**

(45) Publication of the grant of the patent:
**03.02.93 Bulletin 93/05**

(84) Designated Contracting States:
**DE FR GB**

(56) References cited:
**GB-A- 2 023 366**
**GB-A- 2 037 530**
**US-A- 3 557 302**

(73) Proprietor: **PIONEER ELECTRONIC CORPORATION**
**No. 4-1, Meguro 1-chome**
**Meguro-ku Tokyo 153(JP)**

(72) Inventor: **Shimizu, Tetsuo c/o Pioneer Electronic Corporation**
**Tokorazawa Works, No. 2610 Hanazono 4-chome**
**Tokorozawa-shi Saitama(JP)**

(74) Representative: **Brunner, Michael John et al**
**GILL JENNINGS & EVERY, Broadgate House,**
**7 Eldon Street**
**London EC2M 7LH(GB)**

EP 0 290 183 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a PAL video signal processing device suitable for video disk players or the like.

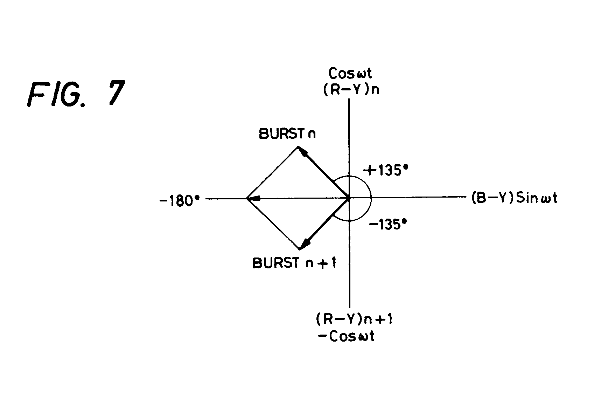

The phase of the color subcarrier (colour burst) portion of a PAL video signal, as shown in FIG. 7, changes alternately between +135° and -135° every horizontal scanning period (1H). Therefore, with a video disk in which a video signal of one frame (625H) per revolution has been recorded, if a frame jump is carried out for a special reproduction such as a still picture reproduction or trick play, the color burst signal becomes discontinuous. That is, when the jump is made in the reverse direction (REV), the phase of the color burst signal advances by 90°; and when the jump is made in the forward direction (FWD) it lags by 90°. Therefore, it is necessary to make the color burst signal continuous at the frame jump.

In the case of video signals in the PAL system, as shown in FIG. 7, the R-Y axis is inverted every 1H, and therefore it is necessary to provide a process of correctly inverting the R-Y axis (to continously correctly invert the R-Y axis).

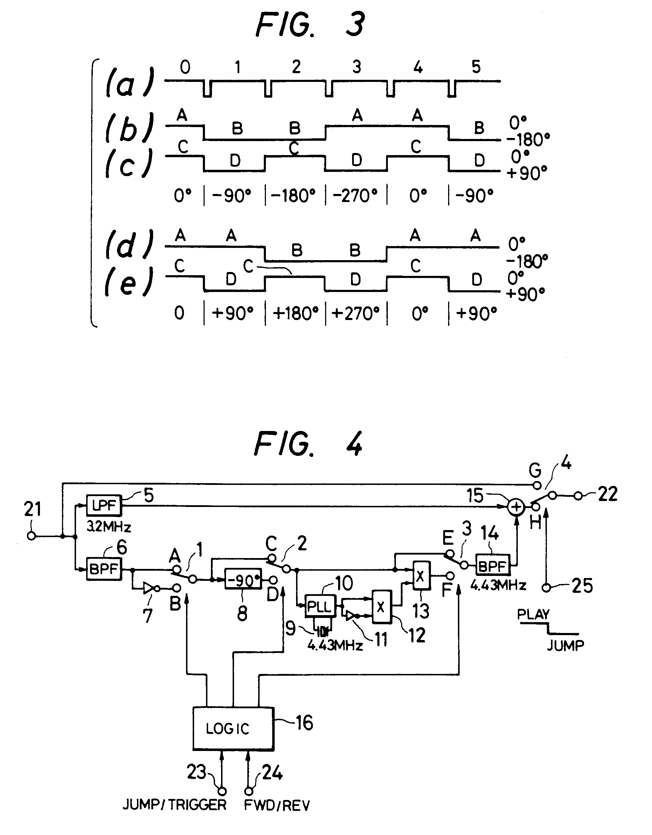

FIG. 4 is a block diagram showing a conventional device for practicing the process. In a normal reproduction operation, the armature of a switch 4 is tripped over to a contact G by a control signal applied through a terminal 25. Therefore, in this case, a video signal applied to a terminal 21 is outputted through a terminal 22, as it is.

When a jump mode is selected, the armature of the switch 4 is tripped over to a contact H, so that the video signal is processed as follows:

The PAL video signal applied to the terminal 21 is applied to a low-pass filter 5, in which a luminance signal component, for instance, of less than or equal to 3.2 MHz is separated therefrom. The video signal is further applied to a band-pass filter 6, in which a color signal component, for instance, of 4.43 MHz is separated therefrom. It goes without saying that the luminance signal component and the color signal component can alternatively be separated by using comb line filters.

The color signal component thus separated is applied to a contact A of a switch 1, and to an inverter circuit 7, the output terminal of which is connected to a contact B of the switch 1. Therefore, the switch 1 is operated to select the inverted or non-inverted color signal component. The output of the switch is applied to a phase shift circuit 8, where its phase is caused to lag by 90°. The output of the phase shift circuit 8 is applied to a contact D of a switch 2, while the non-phase shifted output of the switch 1 is applied to a contact C of the switch. Therefore, the switch 2 is operated to select the phase-shifted or non-phase-shifted signal.

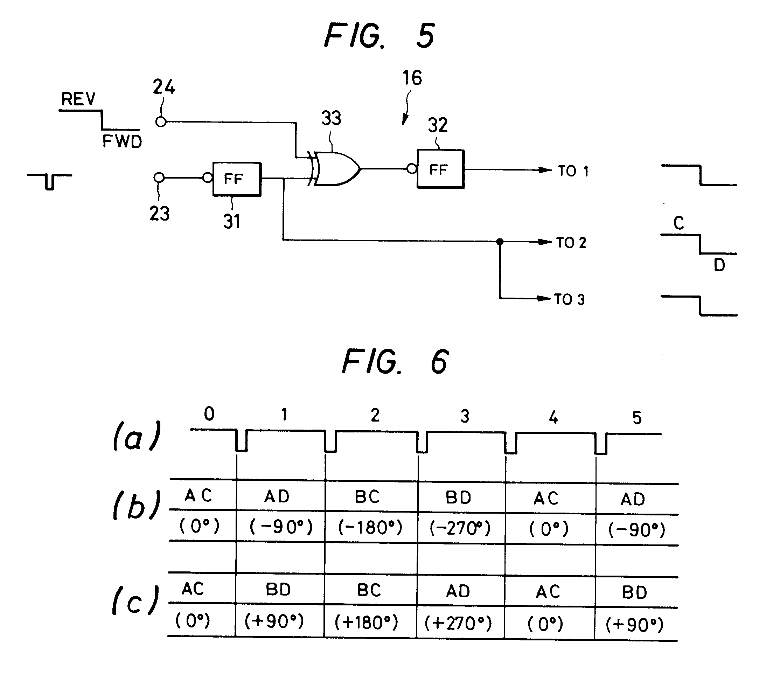

The switches 1 and 2 are operated as indicated in FIG. 6 by means of a logic circuit 16 which is arranged as shown in FIG. 5. When the jump is in the reverse direction, a logic "1" control signal is applied to a terminal 24. A jump trigger pulse is applied to a terminal 23, so that a T flip-flop 31 is triggered by its negative edge. The output of the T flip-flop 31, which is supplied to an EXCLUSIVE OR circuit 33, is changed between logic "1" and "0" whenever it is triggered. As "1" is applied to the other terminal of the EXCLUSIVE OR circuit 33, the latter 33 provides an output which is opposite in logic level to that of the flip-flop 31. Another T flip-flop 32 is triggered by the negative edge of the output of the EXCLUSIVE OR circuit 33. Whenever the T flip-flop 32 is triggered, its output is inverted between logic "1" and "0". Thus, whenever the jump trigger pulse is inputted twice (every two frames), the flip-flop 32 inverts its output to operate the switch 1. On the other hand, when the jump trigger pulse is applied (every frame), the flip-flop 31 inverts its output to operate the switch 2. Accordingly, when the jump trigger pulse is applied as shown part (a) of FIG. 6, the armatures of the switches 1 and 2 are tripped as indicated in the part (b) of FIG. 6, and the output signal of the switch 2 lags by a phase angle of 90° every jump (every frame). In the reverse jump, the band-pass filter 6 provides the color burst every jump which advances by a phase angle of 90°, and therefore the phase of the color burst outputted by the swith 2 is continuous.

On the other hand, in a forward jump, the logic "0" control signal is applied to the terminal 24. That is, the output of the EXCLUSIVE OR circuit 33 is the same in logic level as that of the flip-flop 31. Therefore, as shown in the part (c) of FIG. 6, the phase of the output signal of the switch 2 advances by 90° each time the jump trigger pulse is applied. In the forward jump, the phase of the color burst outputted by the band-pass filter 6 lags by 90° every jump, and therefore the phase of the color burst outputted by the switch 2 is continuous.

The color burst signal thus made continuous in phase is applied to a phase-locked loop (PLL) circuit 10 having a 4.43 MHz reference signal generating circuit 9, to reproduce the color subcarrier signal. In general, the output of the PLL circuit is shifted by a phase angle of 90° from the input. As shown in FIG. 7, the phase of the color burst is changed alternately between + 135° and -135° every 1H, and therefore the average phase is -180°. Therefore, the PLL circuit 10 outputs a signal for the (R-Y)n axis, i.e., $\cos \omega t$.

The output signal of the PLL circuit 10 is applied directly to a multiplication circuit 12 and is also applied through an inverter circuit 11 to the circuit 12, where the two inputs are subjected to multiplication to provide the following signal:

$$\cos \omega t.(-\cos \omega t) = -(\cos 2\omega t + \cos 0)/2 \quad (1)$$

The multiplication circuit 12 extracts a component of $2\omega t$ from the signal and amplifies it twice to output the following signal $e_1$:

$$e_1 = -\cos 2\omega t \quad (2)$$

A PAL color signal $e_2$, as shown in FIG. 7, is subjected to rectangular two-phase modulation, and therefore

$$e_2 = (B-Y)\sin \omega t + (R-Y)\cos \omega t \text{ (in the case of nH)-} \quad (3)$$

or

$$e_2 = (B-Y)\sin \omega t - (R-Y)\cos \omega t \text{ (in the case of } (n+1)H) \quad (4)$$

It is assumed that the color signal $e_2$ is represented by the above-described equation (3). In this case, a multiplication circuit 13 calculates the product of the output of the switch 2 and that of the multiplication circuit 12, thus providing the following signal $e_1 e_2$:

$$
\begin{aligned}
e_1 e_2 &= ((B-Y)\sin \omega t + (R-Y)\cos \omega t)(-\cos 2\omega t) \\
&= -((B-Y)\sin \omega t \cos 2\omega t + (R-Y)\cos \omega t \cos 2\omega t) \\
&= -((B-Y)\sin 3\omega t - (B-Y)\sin \omega t + (R-Y)\cos \omega t + (R-Y)\cos 3\omega t)/2 \quad (5)
\end{aligned}
$$

Only the component of $\omega t$ is extracted from the signal and is amplified twice. That is, the amplification circuit 13 outputs the following signal $e_3$:

$$e_3 = (B-Y)\sin \omega t - (R-Y)\cos \omega t \quad (6)$$

As is apparent from comparison of equation (3) with equation (6), the (R-Y) axis of the signal $e_3$ is inverted with respect to that of the signal $e_2$.

Therefore, if, with the aid of the output of the flip-flop 31, the switch 3 is operated every jump trigger pulse so as to alternately select the signals $e_2$ and $e_3$, then the (R-Y) axis of the color signal immediately after the jump is inverted with respect to that of the color signal immediately before the jump so that the continuity of inversion is maintained.

The output (color signal) of the switch 3 is applied through a band-pass filter 14 having a central frequency 4.43 MHz to an addition circuit 15, where it is added to the output (luminance signal) of the low-pass filter 5. The output of the addition circuit 15 is applied through a contact H of a switch 4 to a terminal 22.

As is apparent from the above description, in the conventional device, the three switches 1, 2 and 3 are operated at the frame jump. If the color signal levels between the contacts A and B, C and D, and E and F of the three switches are not in correct correspondence to one another, then color flicker will occur. Therefore, level adjustment of the signals must be carried out at the three positions.

If the phase of the color subcarrier outputted by the PLL circuit 10 is shifted by $\alpha$ degrees, then the phase of the color signal corrected is shifted by $2\alpha$ degrees. This will also result in color flicker. Accordingly, it is necessary to adjust the PLL circuit 10. Thus, adjustment is required at four positions in total.

As is apparent from the above description, conventional devices have a number of parts which must be adjusted or a number of circuit elements which need to be designed with high accuracy. Therefore, with conventional devices it is, in practice, difficult to eliminate colour flicker during jumping. Furthermore, the conventional device is disadvantageous in that the number of components employed is large, it is intricate in arrangement, and accordingly high in manufacturing cost.

Furthermore, in conventional devices, the luminance signal and the colour signal are separated from the video signal, and the colour signal thus separated is added to the luminance signal after being suitably processed. Therefore, conventional devices suffer from the difficulty that the luminance signal is limited in bandwidth, with the result of a deteriorated signal.

Accordingly, an object of this invention is to provide a PAL video signal processing device which is small both in the number of parts to be adjusted and in the number of components, simple in arrangement and low in manufacturing cost, and which substantially prevent colour flicker. Preferably, the video signal will not be divided into the luminance signal and the colour signal so that it can be processed as it is to prevent the signal from deteriorating.

GB-A-2023366 discloses a PAL video signal processing device having a first circuit for receiving a colour component signal of a video signal and providing a first output; a second circuit receiving the output of the first circuit and providing a second output; one of the first and second circuits including means for phase-shifting the signal applied thereto; and a switch for selectively outputting one of the phase-shifted and the non-phase-shifted or non-time delayed signal; and the other of the first and second circuits including a delay circuit for delaying the signal applied thereto by the horizontal scanning period; and a switch for selectively outputting the delayed or non-delayed signal; and a logic circuit for controlling the switching of the switches in the one and other circuits. A similar device is known from GB-A-2037530.

According to the present invention there is provided a PAL video signal processing device having a first circuit for receiving a video signal having a colour subcarrier signal and providing a first output; a second circuit receiving the output of the first circuit and providing a second output; and a logic circuit for controlling switching of signals in the circuits, one of the circuits including a first delay means for delaying the signal applied thereto by the horizontal scanning period, and a switch for selectively outputting the delayed or non-delayed signal from the first delay means; characterised in that

the other of the circuits includes a second delay means for delaying by a period of time corresponding to a phase difference of 180° of the colour subcarrier signal, the signal applied thereto, and a switch controlled by the logic means for selectively outputting the delayed signal or the non delayed signal from the second delay means.

In the device, the video signal is not divided into the colour signal component and the luminance signal component; that is, it is processed, as it is, by the first and second circuits. The first circuit or the second circuit selectively outputs the video signal either delayed by a period of time corresponding to a phase difference of 180° of the colour subcarrier or the video signal not delayed; while the second circuit or the first circuit selectively outputs the video signal delayed by 1H or the video signal not delayed. This selection is achieved in response to the output signals of the logic circuit.

Therefore, the PAL video signal processing device of the invention is small both in the number of parts to be adjusted and in the number of components, simple in arrangement and low in manufacturing cost, and can substantially prevent colour flicker. Furthermore, the colour signal is not separated from the luminance signal; that is, the video signal is processed as it is. This eliminates the difficulty accompanying the conventional device that the luminance signal is limited in bandwidth, and the signal is therefore deteriorated.

In a device of the invention therefore, a video signal of the PAL system delayed by a period of time corresponding to a phase difference of 180° of the colour subcarrier or the video signal not delayed is combined with the video signal delayed by 1H (horizontal scanning period) or the video signal not delayed, so that at the frame jump the colour subcarrier is made continuous and the inversion of the R-Y axis is also made continuous.

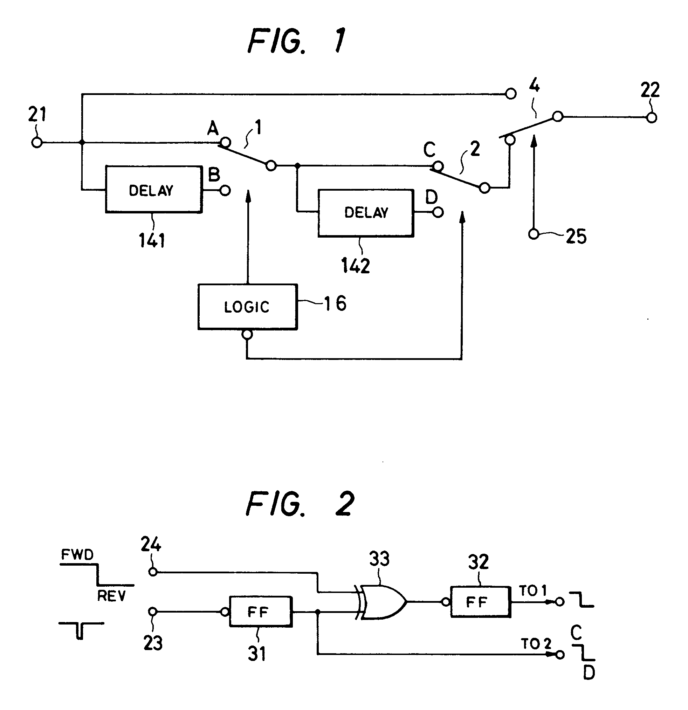

An example of a device according to the invention will now be described with particular reference to Figures 1 & 2 of the accompanying drawings, in which:-

Fig. 1 is a block diagram a PAL video signal processing device according to this invention;

Fig. 2 is a block diagram showing a logic circuit in the device;

Fig. 3 is a timing chart for a description of the operation of the device;

Fig. 4 is a block diagram showing a conventional PAL video signal processing device;

Fig. 5 is a block diagram in a logic circuit in the conventional device;

Fig. 6 is a timing chart for a description of the operation of the conventional device; and,

Fig. 7 is a vector diagram showing a video signal according to the PAL system.

Fig. 1 is a block diagram of a PAL video signal processing device according to this invention, in which circuit elements corresponding functionally to those which have been described with reference to FIG. 4 are therefore designated by corresponding reference numerals or characters. In the normal reproduction mode, it operates in the same manner as the above-described conventional device.

In the jump mode, a video signal applied to the terminal 21 is passed to a delay circuit 141. The delay time of the delay circuit 141 has been set to a value corresponding to a phase difference of 180° of the colour subcarrier in the PAL system; that is, it has been set to 113 ns [$1/(4.43 \times 10^6 \times 2)$] because the frequency fc of the colour subcarrier is 4.43 MHz. The switch 1 selectively transmits the signal delayed by the delay circuit 141 or the non-delayed signal. Therefore, the colour subcarrier output (or the output of the delay circuit 141) at the contact B of the switch 1 lags by a phase angle of 180° behind the output (or the non-delayed output) at the contact A of the switch 1. In other words, the delay circuit 141 functions as a delay circuit for substantially delaying the PAL signal colour subcarrier by a phase angle of 180°.

The output of the switch 1 is delayed by 1H (64 μs) by another delay circuit 142. The switch 2 selectively transmits the delayed signal or the non-delayed signal.

The output at the contact D of the switch 2 (the output of the delay circuit 142) leads the output at the contact C (the non-delayed output) by a phase angle of 90°. In other words, the delay circuit 142 substantially functions as a phase advancing circuit to advance the colour subcarrier of the PAL signal by a phase angle of 90°.

As is apparent from the above description, the delay circuits 141 and 142 serve as phase shift circuits for the colour carrier; however, they cannot be replaced merely by phase shift circuits and inverter circuits, because the video signal applied thereto includes not only a colour signal but also a luminance signal. The frequency $f_c$ of a colour subcarrier signal according to the PAL system is determined as follows:

$$f_c = (284 - 1/4 + 1/625)f_H \qquad (7)$$

where $f_H$ is the horizontal synchronizing signal frequency.

As was described before, the subcarrier signal in the case of nH leads that in the case of (n + 1)H by a phase angle of 90°. Accordingly, the output provided at the contact D of the switch 2 (i.e., the output of the delay circuit 142) leads the output at the contact C (i.e., the non-delayed output) by a phase angle of 90°. In other words, the delay circuit 142 functions substantially as a phase advancing circuit to advance the colour subcarrier of the PAL signal by a phase angle of 90°.

The switches 1 and 2 are operated by a logic circuit 16 arranged, for example, as shown in Fig. 2. The logic circuit 16 is fundamentally similar in arrangement to that shown in Fig. 5. However, it should be noted that in the logic circuit 16, as opposed to that of Fig. 5, the control signal applied to the terminal 24 is at logic level "1" in the forward jump, and it is at a logic level "0" in the reverse jump. Therefore, with a jump trigger pulse as shown in the part (a) of Fig. 3 applied to the terminal 23, in a reverse jump a control signal as shown in the part (b) of Fig. 3 is supplied to the switch 1 while a control signal as shown in the part (c) of Fig. 3 is supplied to the switch 2. Therefore, the colour subcarrier signal outputted by the switch 2 lags by a phase angle of 90° every jump.

On the other hand, in the forward jump, control signals as shown in the parts (d) and (e) of Fig. 3 are supplied to the switches 1 and 2, respectively. Accordingly, the colour subcarrier signal outputted by the switch 2 advances by a phase angle of 90° every jump.

As was described before, in the PAL system the (R-Y) axis is inverted every 1H, and therefore in one frame (625H), the first and the last (R-Y) axis are in the same direction. Therefore, when the switch 2 is operated every frame jump, the (R-Y) axis provided after the operation of the switch 2 is opposite to that provided before.

In still picture reproduction mode, a video signal in which the colour signal is shifted by 1H is outputted every other frame; however, in practice it will cause no trouble.

Level adjustment is required at only two positions, the switches 1 and 2. No adjustment is required for the delay circuit circuits 141,142. Delay circuits having less fluctuation of delay time can be readily obtained.

The positions of the circuit consisting of the delay circuit 141 and the switch 1 and of the circuit consisting of the delay circuit 142 and the switch 2 may be changed.

The invention is applicable not only to the case of analog video signals but also to the case of digital video signals.

## Claims

1. A PAL video signal processing device having a first circuit for receiving a video signal having a colour subcarrier signal and providing a first output; a second circuit receiving the output of the first circuit and providing a second output; and a logic circuit (16) for controlling switching of signals in the circuits, one of the circuits including a first delay means (142) for delaying the signal applied thereto by the horizontal scanning period, and a switch (2) for selectively outputting the delayed or non-delayed signal from the first delay means; characterised in that

the other of the circuits includes a second delay means (141) for delaying by a period of time corresponding to a phase difference of 180° of the colour subcarrier signal, the signal applied thereto, and a switch (1) controlled by the logic means (16) for selectively outputting the delayed signal or the non delayed signal from the second delay means.

## Patentansprüche

1. Vorrichtung zur Verarbeitung eines PAL-Videosignals mit einem ersten Schaltkreis zum Empfangen eines Videosignals mit einem Farbhilfsträgersignal und zum Liefern einer ersten Ausgabe, einem zweiten Schaltkreis, welcher die Ausgabe des ersten Schaltkreises empfängt und eine zweite Ausgabe liefert, und mit einem Logikschaltkreis 16 zum Kontrollieren des Schaltens von Signalen in den Schaltkreisen, wobei einer der Schaltkreise ein erstes Verzögerungsmittel 142 zum Verzögern des Signals enthält, welches bei einer horizontalen Abtastperiode daran angelegt ist, und mit einem Schalter 2 zum wahlweisen Ausgeben des verzögerten oder nicht-verzögerten Signals von dem ersten Verzögerungsmittel,

**dadurch gekennzeichnet,**

daß der andere der Schaltkreise ein zweites Verzögerungsmittel 141 zum Verzögern des daran angelegten Signals um eine Zeit, welche einer Phasendifferenz von 180° des Farbhilfsträgersignals entspricht, und einen von den Logikmitteln 16 kontrollierten Schalter 1 zum wahlweisen Ausgeben des verzögerten Signals oder des nicht-verzögerten Signals von dem zweiten Verzögerungsmittel enthält.

## Revendications

1. Dispositif de traitement de signal vidéo PAL comprenant un premier circuit pour recevoir un signal vidéo comportant un signal de sous-porteuse couleur et pour produire une première sortie ; un second circuit pour recevoir la sorite du premier circuit et pour produire une seconde sortie ; et un circuit logique (16) pour commander une commutation de signaux dans les circuits, l'un des circuits incluant un premier moyen de retard (142) pour retarder le signal qui lui appliqué de la période de balayage horizontal et un commutateur (2) pour émettre en sortie de façon sélective le signal retardé ou non retardé en provenance du premier moyen de retard ;

caractérisé en ce que :

l'autre des circuits inclut un second moyen de retard (141) pour retarder d'une période temporelle correspondant à une différence de phase de 180° du signal de sous-porteuse couleur le signal qui lui est appliqué et un commutateur (1) commandé par le moyen logique (16) pour émettre en sortie de façon sélective le signal retardé ou le signal non retardé en provenance du second moyen de retard.

## FIG. 1

## FIG. 2

7

# FIG. 3

# FIG. 4

EP 0 290 183 B1

## FIG. 5

## FIG. 6

| | 0 | 1 | 2 | 3 | 4 | 5 |
|---|---|---|---|---|---|---|
| (a) | | | | | | |

| (b) | A C | AD | BC | BD | AC | AD |
|---|---|---|---|---|---|---|
| | ( 0° ) | ( −90° ) | ( −180° ) | ( −270° ) | ( 0° ) | ( −90° ) |

| (c) | AC | BD | BC | AD | AC | BD |
|---|---|---|---|---|---|---|
| | ( 0° ) | ( +90° ) | ( +180° ) | ( +270° ) | ( 0° ) | ( +90° ) |

*FIG. 7*